# EUROPEAN PATENT APPLICATION

(11) **EP 3 282 313 A1**
(43) Date of publication of application: **14.02.2018**
(21) Application number: 15890237.9
(22) Date of filing: 28.04.2015
(51) Int. Cl.: G02F 1/139, G02F 1/1343

(54) **MULTI-DOMAIN VERTICAL ALIGNMENT LIQUID CRYSTAL SCREEN AND MANUFACTURING METHOD THEREOF**

(71) Applicant: Huawei Technologies Co. Ltd., Shenzhen, Guangdong 518129 (CN)
(72) Inventor: LIANG, Yanfeng, Shenzhen Guangdong 518129 (CN); XIE, Liang, Shenzhen Guangdong 518129 (CN); LIU, Chen, Shenzhen Guangdong 518129 (CN)
(74) Representative: Maiwald Patentanwalts GmbH
(86) International application number: PCT/CN2015/077703
(87) International publication number: WO 2016/172857

(57) **Abstract**

A multi-domain vertical alignment liquid crystal display and a liquid crystal display manufacturing method are disclosed. The multi-domain vertical alignment liquid crystal display includes a first panel (301) and a second panel (302), where: the first panel (301) is parallel to the second panel (302), a liquid crystal (303) is filled between the first panel (301) and the second panel (302), and both the first panel (301) and the second panel (302) are transparent; a first polarizer (3011) and a second polarizer (3021) respectively cover outsides of the first panel (301) and the second panel (302), and light transmission axes of the first polarizer (3011) and the second polarizer (3021) are perpendicular to each other; and at least one first groove (306) is provided on the second panel (302), and a slope of the first groove (306) is smoothly connected to another part of the second panel (302) and the bottom of the first groove (306).

## Description

### TECHNICAL FIELD

The present invention relates to the field of electronic technologies, and in particular, to a multi-domain vertical alignment liquid crystal display and a liquid crystal display manufacturing method.

### BACKGROUND

For a liquid crystal display in a multi-domain vertical alignment (Multi-domain Vertical Alignment, MVA) mode, when no voltage is applied, a major axis of a liquid crystal molecule of the liquid crystal display is perpendicular to a screen, as compared with being parallel to the screen in a TN mode. Each graphical element includes multiple vertical alignment liquid crystal molecule domains. When a voltage is applied to liquid crystals, liquid crystal molecules tilt in different directions. In this way, compensation for a corresponding direction may be obtained when the screen is observed from different angles, and therefore a viewing angle is improved.

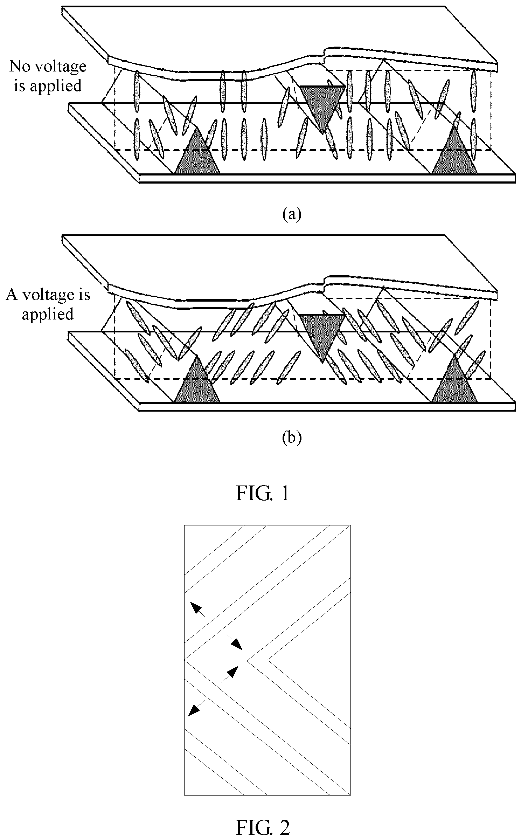

FIG. 1 shows a typical liquid crystal molecule arrangement in an MVA liquid crystal display. There are several triangular-prism protrusions on top and bottom panels of the liquid crystal display. When no voltage is applied, a major axis of a liquid crystal molecule is perpendicular to the panels of the liquid crystal display, and once a voltage is applied, the major axis of the liquid crystal molecule is perpendicular to the triangular-prism protrusions under the action of an electric field. It is well known that top and bottom panels of a liquid crystal display are two polarizers whose light transmission axes are perpendicular to each other. When no voltage is applied, a liquid crystal molecule of an MVA liquid crystal display is perpendicular to the panels, light emitted from a backlight cannot penetrate through the two panels, and therefore a screen is in a dark state. Once a voltage is applied, an angle is formed between a major axis of the liquid crystal molecule and the panels, and a polarization plane of linearly polarized light passing through the bottom panel rotates under a light rotation action of a liquid crystal, so that the linearly polarized light may pass through the top panel, and therefore the screen is in a bright state. To improve a viewing angle and a contrast of the screen, triangular-prism protrusions are disposed on both the top panel and the bottom panel. Liquid crystal molecules between the two protrusions tilt in a same direction, and a region between the two protrusions is referred to as a "domain". After a voltage is applied, molecules in different domains tilt in different directions. In this way, compensation for different directions may be implemented. FIG. 1 shows a typical dual-domain structure. If a projected shape of a triangular-prism protrusion on a panel is designed as a fold line shape, a four-domain structure is formed, as shown in FIG. 2. As shown by an arrow in the figure, liquid crystal molecules are segmented into four different alignments by a fold line-shaped protrusion. Certainly, more domains may be designed.

In a process of implementing the present invention, an inventor finds that, in an existing MVA liquid crystal display, because the foregoing protrusion is sharp, alignments of liquid crystal molecules at a sharp location are disordered, and light from a backlight may pass through even if no voltage is applied. Consequently, a "light leakage" phenomenon occurs.

### SUMMARY

An objective of the present invention is to provide a multi-domain vertical alignment liquid crystal display and a liquid crystal display manufacturing method, to reduce screen light leakage.

According to a first aspect of the present invention, a multi-domain vertical alignment liquid crystal display includes:
a first panel and a second panel, where the first panel is parallel to the second panel, a liquid crystal is filled between the first panel and the second panel, and both the first panel and the second panel are transparent;
a first polarizer and a second polarizer respectively cover outsides of the first panel and the second panel, and light transmission axes of the first polarizer and the second polarizer are perpendicular to each other; and
at least one first groove is provided on the second panel, and a slope of the first groove is smoothly connected to another part of the second panel and the bottom of the first groove.

Optionally, at least one pixel region is obtained from the second panel by means of segmentation, and in the pixel region, the first groove is parallel to a border of the pixel region.

Optionally, at least one pixel region is obtained from the second panel by means of segmentation, and in the pixel region, the first groove is in a fold line shape.

Optionally, corners of the fold line shape are smoothly connected.

Optionally, at least one second groove is provided on the first panel, and a slope of the second groove is smoothly connected to another part of the first panel and the bottom of the first groove.

Optionally, the first groove and the second groove are disposed in a staggered manner and are parallel to each other.

Optionally, at least one protrusion is disposed on the first panel, the top of the protrusion is in a smooth shape, the top of the protrusion is smoothly connected to a slope of the protrusion, and the slope of the protrusion is smoothly connected to another part of the first panel.

Optionally, the first groove and the protrusion are disposed in a staggered manner and are parallel to each other.

According to a second aspect of the present invention, a multi-domain vertical alignment liquid crystal display includes:
a first panel and a second panel, where the first panel is parallel to the second panel, a liquid crystal is filled between the first panel and the second panel, and both the first panel and the second panel are transparent;
a first polarizer and a second polarizer respectively cover outsides of the first panel and the second panel, and light transmission axes of the first polarizer and the second polarizer are perpendicular to each other; and
at least one first protrusion is disposed on the second panel, the top of the first protrusion is in a smooth shape, the top of the first protrusion is smoothly connected to a slope of the first protrusion, and the slope of the first protrusion is smoothly connected to another part of the first panel.

Optionally, at least one pixel region is obtained from the second panel by means of segmentation, and in the pixel region, the first protrusion is parallel to a border of the pixel region.

Optionally, at least one pixel region is obtained from the second panel by means of segmentation, and in the pixel region, the first protrusion is in a fold line shape.

Optionally, corners of the fold line shape are smoothly connected.

Optionally, at least one second protrusion is disposed on the first panel, the top of the second protrusion is in a smooth shape, the top of the second protrusion is smoothly connected to a slope of the second protrusion, and the slope of the second protrusion is smoothly connected to another part of the first panel.

Optionally, the first protrusion and the second protrusion are disposed in a staggered manner and are parallel to each other.

Optionally, at least one groove is provided on the first panel, and a slope of the groove is smoothly connected to another part of the first panel and the bottom of the groove.

Optionally, the first protrusion and the groove are disposed in a staggered manner and are parallel to each other.

According to a third aspect of the present invention, a liquid crystal display manufacturing method includes:
preparing a panel, where the panel is coated with a light sensitive layer;
placing a mask on the panel, where a stripe with gradient light transmission rates is disposed on the mask; and
exposing the mask.

By means of the technical solutions provided in the foregoing aspects of the present invention, a slope of a groove or a protrusion is smoothly connected to another part of a panel, and there is no sharp part. Therefore, when no voltage is applied, a major axis of a liquid crystal molecule does not point in a disordered manner. In this way, a light leakage phenomenon is effectively alleviated.

### BRIEF DESCRIPTION OF DRAWINGS

FIG. 1 is a schematic structural diagram of a multi-domain vertical alignment liquid crystal display in the prior art;
FIG. 2 is a schematic diagram of a fold line-shaped protrusion of a multi-domain vertical alignment liquid crystal display in the prior art;
FIG. 3 is a profile chart of a multi-domain vertical alignment liquid crystal display according to an embodiment of the present invention;
FIG. 4A is a schematic diagram of a planar shape of a groove on a panel according to an embodiment of the present invention;
FIG. 4B is a schematic diagram of a planar shape of a groove on a panel according to another embodiment of the present invention;
FIG. 5 is a profile chart of a multi-domain vertical alignment liquid crystal display according to an alternative embodiment of the present invention;
FIG. 6A is a schematic diagram of a planar shape of a protrusion on a panel according to an embodiment of the present invention;
FIG. 6B is a schematic diagram of a planar shape of a protrusion on a panel according to another embodiment of the present invention;
FIG. 7 is a profile chart of a multi-domain vertical alignment liquid crystal display according to another embodiment of the present invention; and
FIG. 8 is a flowchart of an embodiment of a liquid crystal display manufacturing method in the present invention.

### DESCRIPTION OF EMBODIMENTS

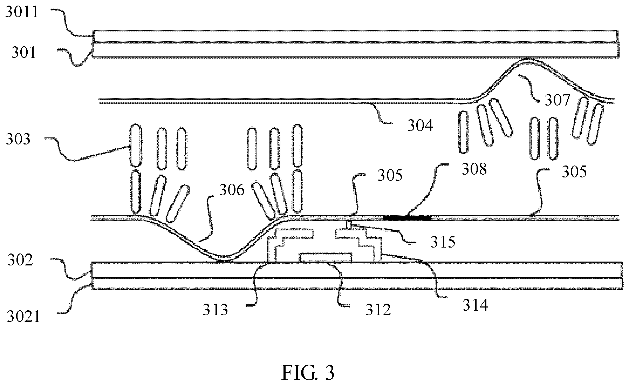

As shown in FIG. 3, an embodiment of the present invention provides a multi-domain vertical alignment liquid crystal display, including: a first panel 301, a second panel 302, and a liquid crystal 303. The first panel 301 is parallel to the second panel 302, and the liquid crystal 303 is filled between the first panel 301 and the second panel 302. It is known to a person skilled in the art that the liquid crystal 303 may be made of an anisotropic liquid crystal material whose dielectric constant is minus. The first panel 301 and the second panel 302 are made of a transparent material, for example, glass or plastics. A first polarizer 3011 and a second polarizer 3021 respectively cover outsides of the first panel 301 and the second panel 302, and light transmission axes of the first polarizer 3011 and the second polarizer 3021 are perpendicular to each other. An alignment film of a vertical alignment type may be further attached to insides of the first panel and the second panel and is configured to help arrange liquid crystal molecules along a direction perpendicular to the first panel and the second panel when no external electrical field is applied. A black matrix (Black Matrix) 308 that prevents a ray from entering a non-pixel region may be disposed on the second panel 302, and the black matrix 308 obtains at least one pixel region from the second panel 302 by means of segmentation. In an embodiment, a common electrode 304 and a pixel electrode 305 are respectively disposed on the first panel 301 and the second panel 302, and at least one scanning line 310 and a signal cable 311 are disposed on the second panel. A thin film transistor is disposed at a cross location between a data signal cable 310 and a scanning signal cable 311. The thin film transistor includes a gate electrode 312, a source electrode 313, and a drain electrode 314. The drain electrode 314 is electrically connected to the pixel electrode 305 by using a contact hole 315. Both the pixel electrode 305 and the common electrode 304 are made of a transparent conducting material, for example, indium tin oxide (ITO) or indium zinc oxide (IZO). At least one groove 306 is disposed on the second panel 302, and a slope of the groove 306 is smoothly connected to another part of the second panel 302 and the bottom of the groove 306. The "smoothly connected" mentioned herein means that a connecting location between the slope and the another part of the second panel 302 and the bottom of the groove 306 is differentiable. When no voltage is applied to the electrodes 304 and 305, a major axis of the liquid crystal molecule is perpendicular to the first panel and the second panel. Certainly, it is known to a person skilled in the art that, when no voltage is applied, a major axis of a liquid crystal molecule at a groove location tilts towards a groove slope because of groove friction. In the prior art, because there is a sharp part on a protrusion, the major axis of the liquid crystal molecule points in a disordered manner at the sharp location. In this way, light leakage occurs when no voltage is applied. However, by means of the technical solutions in the foregoing embodiment of the present invention, a slope of the groove 306 is smoothly connected to another part of the second panel 302 and the bottom of the groove 306, and there is no sharp part. Therefore, when no voltage is applied, a major axis of a liquid crystal molecule does not point in a disordered manner. In this way, a light leakage phenomenon is effectively alleviated.

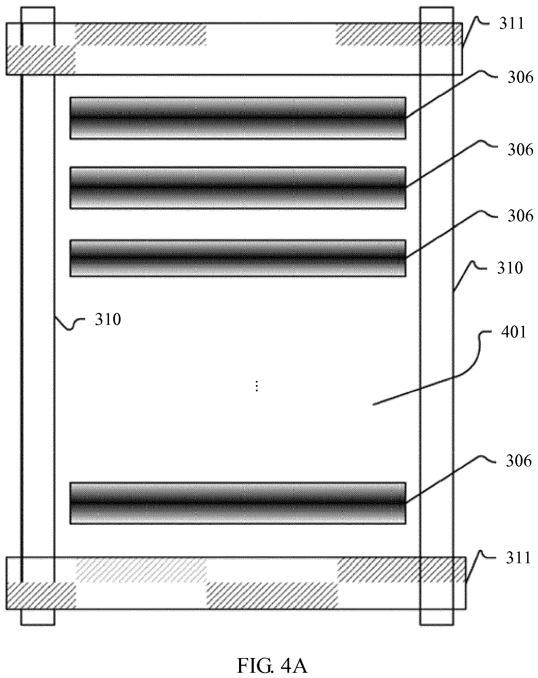

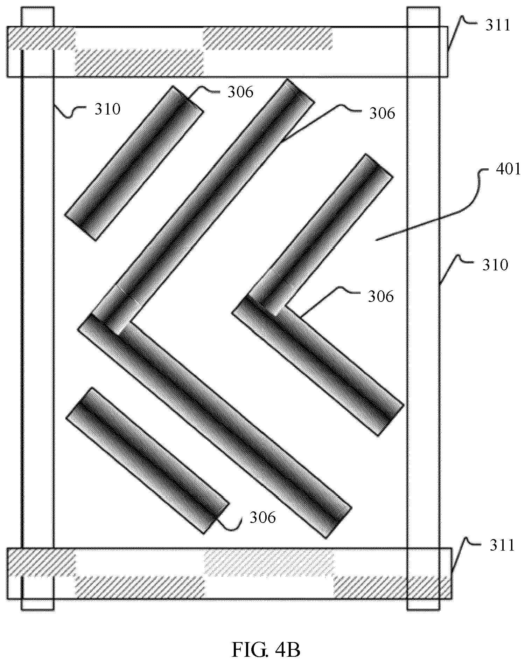

As shown in FIG. 4A and FIG. 4B, the groove 306 on the second panel 302 may have multiple planar shapes. In an embodiment shown in FIG. 4A, in a pixel region 401, the groove 306 is disposed as a straight line parallel to a border of the pixel region 401. In this way, a dual-domain structure may be formed. In an embodiment shown in FIG. 4B, in a pixel region 401, the groove 306 is disposed to be in a fold line shape. In this way, a four-domain structure may be formed. To better reduce light leakage, corners of the fold line may be smoothly connected. That is, the corners of the fold line shape are differentiable, and there is no sharp part. In this way, sharp parts are further reduced. Certainly, it is known to a person skilled in the art that the groove 306 may also be disposed to be in another shape, for example, a splay shape that is symmetrical along a center line of the pixel region 401.

As shown in FIG. 3, in an embodiment, in addition to the groove 306 disposed on the second panel 302, at least one groove 307 is disposed on the first panel. A structure of the groove 307 may be the same as or different from that of the groove 306. That is, the groove 307 may be of a conventional structure with a sharp corner, or may be of a structure, in the foregoing embodiment, in which a slope of the groove is smoothly connected to another part of the first panel and the bottom of the groove. In an embodiment, the groove 306 and the groove 307 are disposed in a staggered manner, that is, a location of the groove 306 on the second panel 302 and a location of the groove 307 on the first panel 301 are staggered. As shown in FIG. 4A and FIG. 4B, a planar shape of the groove 307 on the first panel 301 and a planar shape of the groove 306 in a corresponding pixel region may be the same and disposed in parallel.

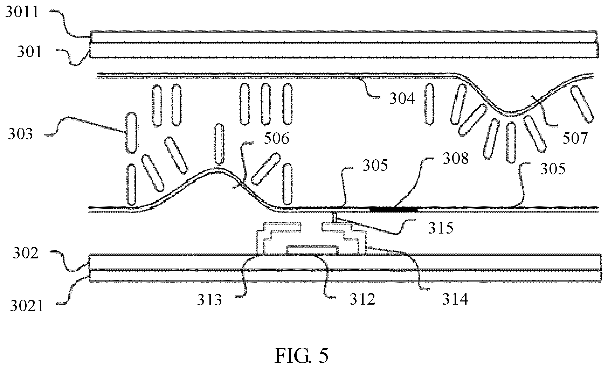

In an alternative embodiment, as shown in FIG. 5, at least one protrusion 506 may be disposed on the second panel 302, and the top of the protrusion 506 is in a smooth shape, that is, there is no non-differentiable sharp point. For example, the top of the protrusion 506 may be in an arc shape, a platform shape, or the like. The top of the protrusion 506 is smoothly connected to a slope of the protrusion 506, and the slope of the protrusion 506 is also smoothly connected to another part of the second panel 302. The "smoothly connected" mentioned herein means that a connecting location between the slope of the protrusion 506 and the another part of the second panel 302 and the top of the protrusion 506 is differentiable. The another part of the second panel 302 may be the same as that of the foregoing embodiment, and details are not described herein.

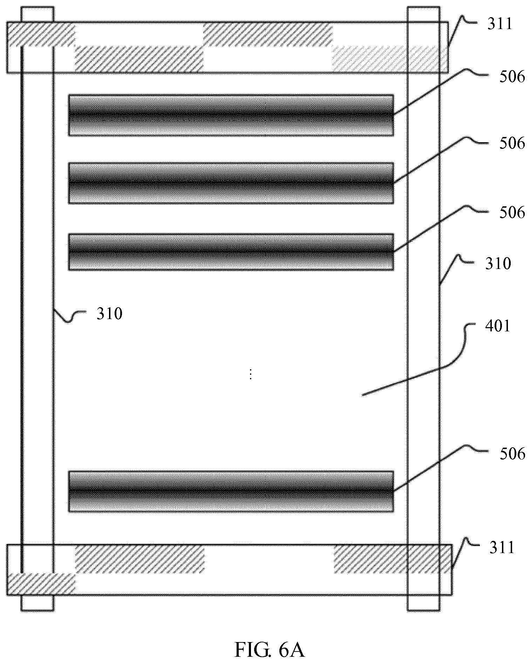

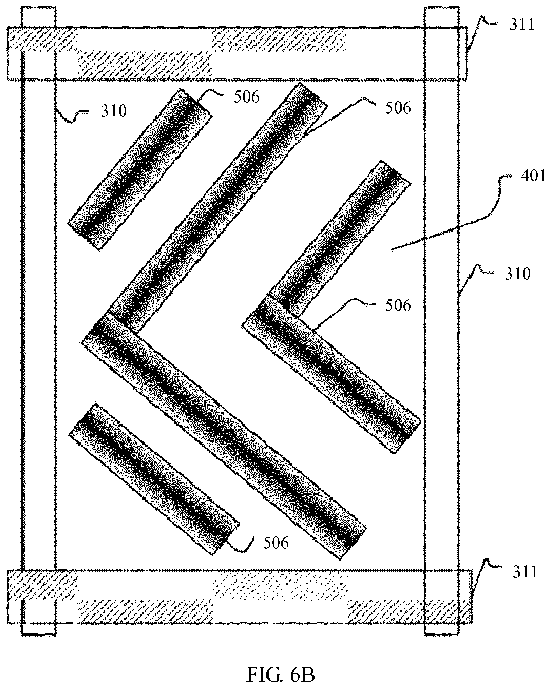

As shown in FIG. 6A and FIG. 6B, the protrusion 506 on the second panel 302 may have multiple planar shapes. In an embodiment shown in FIG. 4A, in a pixel region 401, the protrusion 506 is disposed as a straight line parallel to a border of the pixel region 401. In this way, a dual-domain structure may be formed. In an embodiment shown in FIG. 4B, the protrusion 506 is disposed to be in a fold line shape. In this way, a four-domain structure may be formed. To better reduce light leakage, corners of the fold line may be smoothly connected. That is, the corners of the fold line shape are differentiable, and there is no sharp part. In this way, sharp parts are further reduced. Certainly, it is known to a person skilled in the art that the protrusion 506 may also be disposed to be in another shape, for example, a splay shape that is symmetrical along a center line of the pixel region 401.

As shown in FIG. 5, in an embodiment, in addition to the protrusion 506 disposed on the second panel 302, at least one protrusion 507 is disposed on the first panel. A structure of the protrusion 507 may be the same as or different from that of the protrusion 506. That is, the protrusion 507 may be of a conventional structure with a sharp corner, or may be of a structure, in the foregoing embodiment, in which a slope of the protrusion is smoothly connected to another part of the first panel 301 and the top of the protrusion. In an embodiment, the protrusion 506 and the protrusion 507 are disposed in a staggered manner, that is, a location of the protrusion 506 on the second panel 302 and a location of the protrusion 507 on the first panel 301 are staggered. As shown in FIG. 4A and FIG. 4B, a planar shape of the protrusion 507 on the first panel 301 and a planar shape of the protrusion 506 in a corresponding pixel region may be the same and disposed in parallel.

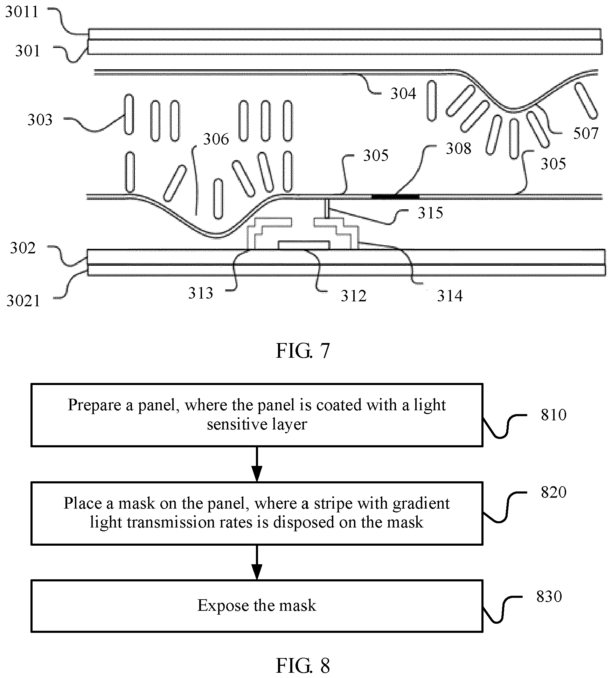

The embodiment in which the groove is provided and the embodiment in which the protrusion is disposed may further be combined. As shown in FIG. 7, a groove may be disposed on one panel, and a protrusion is disposed on the other panel. The protrusion and the groove may be disposed in a staggered manner.

By means of the technical solutions in the foregoing embodiment of the present invention, a slope of the groove 306 is continuously and smoothly connected to another part of the second panel 302 and the bottom of the groove 306, and there is no sharp part. Therefore, when no voltage is applied, a major axis of a liquid crystal molecule does not point in a disordered manner. In this way, a light leakage phenomenon is effectively alleviated.

As shown in FIG. 8, an embodiment of a liquid crystal display manufacturing method provided in the present invention includes the following steps.

810. Prepare a panel, where the panel is coated with a light sensitive layer.

The panel herein may be made of a transparent material, for example, glass or plastics. The light sensitive layer may be made of various materials sensitive to an ultraviolet ray or a ray on another band, for example, acrylic acid or an epoxy acrylic acid light polymeric material. In an embodiment, a thickness of the light sensitive layer is 100 micrometers. Certainly, a person skilled in the art can understand that the foregoing value is an example, and another value may be selected according to a requirement. This is not limited in this embodiment of the present invention.

820. Place a mask on the panel, where a stripe with gradient light transmission rates is disposed on the mask.

A shape of the stripe is the same as the planar shape of the groove 306 in the foregoing embodiment. "Gradient light transmission rates" herein means that light transmission rates of the stripe continuously change without hopping. It is known to a person skilled in the art that a light transmission rate at a stripe location corresponding to the bottom of a groove is highest, a light transmission rate corresponding to a non-groove region is lowest, and the light transmission rate continuously changes between the bottom of the groove and the non-groove region.

830. Expose the mask.

A ray used to expose the mask is on a band to which the light sensitive layer is sensitive. For example, if the light sensitive layer is sensitive to an ultraviolet ray, the ultraviolet ray is used for exposure. After the mask is exposed, a groove is etched on the light sensitive layer of the panel under the action of light. Because the light transmission rates of the stripe on the mask are gradient, a slope of the groove smoothly transits, and there is no sharp part, so that the structure of the liquid crystal display in the foregoing embodiment is formed.

In addition, the technology, the system, the apparatus, the method separately described in the foregoing embodiments and the technical features separately described in the foregoing embodiments may be combined, so as to form other modules, methods, apparatuses, systems, and technologies without departing from the spirit and principle of the present invention. These modules, methods, apparatuses, systems, and technologies that are obtained by means of combination according to records of the embodiments of the present invention fall within the protection scope of the present invention.

The foregoing embodiments are merely example embodiments of the present invention, but are not intended to limit the protection scope of the present invention. Any modification, equivalent replacement, or improvement made without departing from the spirit and principle of the present invention shall fall within the protection scope of the present invention.

## Claims

1. A multi-domain vertical alignment liquid crystal display, comprising:
a first panel and a second panel, wherein the first panel is parallel to the second panel, a liquid crystal is filled between the first panel and the second panel, and both the first panel and the second panel are transparent;
a first polarizer and a second polarizer respectively cover outsides of the first panel and the second panel, and light transmission axes of the first polarizer and the second polarizer are perpendicular to each other; and
at least one first groove is provided on the second panel, and a slope of the first groove is smoothly connected to another part of the second panel and the bottom of the first groove.

2. The liquid crystal display according to claim 1, wherein:
at least one pixel region is obtained from the second panel by means of segmentation, and in the pixel region, the first groove is parallel to a border of the pixel region.

3. The liquid crystal display according to claim 1, wherein:
at least one pixel region is obtained from the second panel by means of segmentation, and in the pixel region, the first groove is in a fold line shape.

4. The liquid crystal display according to claim 3, wherein:
corners of the fold line shape are smoothly connected.

5. The liquid crystal display according to any one of claims 1 to 4, wherein:
at least one second groove is provided on the first panel, and a slope of the second groove is smoothly connected to another part of the first panel and the bottom of the first groove.

6. The liquid crystal display according to claim 5, wherein:
the first groove and the second groove are disposed in a staggered manner and are parallel to each other.

7. The liquid crystal display according to any one of claims 1 to 6, wherein:
at least one protrusion is disposed on the first panel, the top of the protrusion is in a smooth shape, the top of the protrusion is smoothly connected to a slope of the protrusion, and the slope of the protrusion is smoothly connected to another part of the first panel.

8. The liquid crystal display according to any one of claim 7, wherein:
the first groove and the protrusion are disposed in a staggered manner and are parallel to each other.

9. A multi-domain vertical alignment liquid crystal display, comprising:
a first panel and a second panel, wherein the first panel is parallel to the second panel, a liquid crystal is filled between the first panel and the second panel, and both the first panel and the second panel are transparent;
a first polarizer and a second polarizer respectively cover outsides of the first panel and the second panel, and light transmission axes of the first polarizer and the second polarizer are perpendicular to each other; and
at least one first protrusion is disposed on the second panel, the top of the first protrusion is in a smooth shape, the top of the first protrusion is smoothly connected to a slope of the first protrusion, and the slope of the first protrusion is smoothly connected to another part of the first panel.

10. The liquid crystal display according to claim 9, wherein:
at least one pixel region is obtained from the second panel by means of segmentation, and in the pixel region, the first protrusion is parallel to a border of the pixel region.

11. The liquid crystal display according to claim 9, wherein:
at least one pixel region is obtained from the second panel by means of segmentation, and in the pixel region, the first protrusion is in a fold line shape.

12. The liquid crystal display according to claim 11, wherein:
corners of the fold line shape are smoothly connected.

13. The liquid crystal display according to any one of claims 9 to 12, wherein:
at least one second protrusion is disposed on the first panel, the top of the second protrusion is in a smooth shape, the top of the second protrusion is smoothly connected to a slope of the second protrusion, and the slope of the second protrusion is smoothly connected to another part of the first panel.

14. The liquid crystal display according to claim 13, wherein:
the first protrusion and the second protrusion are disposed in a staggered manner and are parallel to each other.

15. The liquid crystal display according to any one of claims 9 to 14, wherein:
at least one groove is provided on the first panel, and a slope of the groove is smoothly connected to another part of the first panel and the bottom of the groove.

16. The liquid crystal display according to claim 15, wherein:
the first protrusion and the groove are disposed in a staggered manner and are parallel to each other.

17. A liquid crystal display manufacturing method, comprising:
preparing a panel, wherein the panel is coated with a light sensitive layer;
placing a mask on the panel, wherein a stripe with gradient light transmission rates is disposed on the mask; and
exposing the mask.
